# EUROPÄISCHE PATENTSCHRIFT

(11) **EP 1 346 879 B1**
(45) Veröffentlichungstag und Bekanntmachung des Hinweises auf die Patenterteilung: **03.08.2005**
(21) Anmeldenummer: 03003088.6
(22) Anmeldetag: 13.02.2003
(51) Int. Cl.: B60R 13/02, B60R 13/04

(54) **Einstiegleiste für einen Kraftfahrzeugschweller**
Profile for a side sill of a motor vehicle
Profilé pour un longeron d'un véhicule

(30) Priorität: 05.03.2002 DE 10209665
(43) Veröffentlichungstag der Anmeldung: 24.09.2003
(73) Patentinhaber: Dr.Ing. h.c.F. Porsche Aktiengesellschaft, 70435 Stuttgart (DE)
(72) Erfinder: Benkler, Olaf, 75242 Neuhausen/Hamberg (DE)

(56) Entgegenhaltungen:
- DE-A- 1 455 855
- DE-U- 29 920 234
- GB-A- 463 197
- US-A- 2 657 948
- US-A- 2 997 329
- US-A- 5 671 967

## Beschreibung

Die Erfindung bezieht sich auf eine Einstiegleiste für ein Kraftfahrzeug nach dem Oberbegriff des Anspruchs 1.

Aus dem DE 299 20 234 U1 ist eine Einstiegleiste bekannt, die an einer Einstiegöffnung eines Kraftfahrzeugs angeordnet ist. Diese besteht im wesentlichen aus einem Einstiegprofil, welches an seiner Oberseite in Längsrichtung verlaufende Nuten aufweist, in denen Zierleisten aus Metall eingesetzt sind.

Aufgabe der Erfindung ist es, eine Einstiegleiste für ein Kraftfahrzeug zu schaffen, die als Trittfläche ein einfach zu montierendes Einsatzelement aufweist, das einen rutschsicheren Ein- und Ausstieg gewährleistet.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß das aus einem Träger bestehende Einsatzelement in vormontierter Weise in einen Ausschnitt einer Einstiegleiste eines Kraftfahrzeugs einklipsbar ist. Hierzu besteht das Einsatzelement aus einer in einem Ausschnitt der Einstiegsleiste gehaltenen Träger, der oberseitig eingesetzte Gummileisten aufweist, die zwischen einer außenseitigen ersten Blende und einer innenseitigen zweiten Blende angeordnet sind. Durch diese Ausbildung des Trägers und der Blenden werden die Gummileisten durch ein vollständiges Umschließen von allen Seiten sicher auf dem Träger gehalten.

Eine Befestigung des Trägers erfolgt über Hakenelemente, die randseitig angeordnet sind und in einem Ausschnitt der Einstiegleiste verhakbar und somit befestigbar sind. Die beiden Blenden werden über mehrere Laschen mit dem Träger verbunden. Der Träger kann somit ohne zusätzliche Schraub- und sonstige Hilfsmittel in dem Träger befestigt werden und auch die Blenden sind in einfacher Weise über die Laschen an diesem festsetzbar, so daß auch ein unkompliziertes Auswechseln der Blenden bzw. der Gummileisten möglich wird.

Vorzugsweise bestehen die Gummileisten aus beabstandet zueinander angeordneten Längssträngen, die über Querstränge eine geschlossene und rechteckförmig ausgestaltete Gummileiste bilden. Die geschlossene Gummileiste ist in einem Freiraum zwischen der Außenblende und der Innenblende angeordnet. Die Gummileiste ragt über die Außenflächen der Blenden hervor. Durch diese Anordnung der Gummileiste auf dem Träger zwischen den beiden Blenden wird eine Antirutschfläche im Trittbereich auf einem Schweller des Fahrzeugs geschaffen, die nach Verschleiß insgesamt oder auch nur zu Teilen mit wenigen Handgriffen einfach auswechselbar ist.

Die Befestigung der Blenden über die Laschen erfolgt durch ein Umbiegen zum Träger hin, wobei die Laschen der Außenblende randseitig des Trägers umgebogen werden oder aber die Laschen sind durch Schlitze des Trägers gesteckt und die Blenden sind durch Umbiegen der Laschen festsetzbar.

Die Blenden bestehen vorzugsweise aus einem Edelstahlblech. Denkbar sind aber auch andere Werkstoffe, wie beispielsweise Carbon.

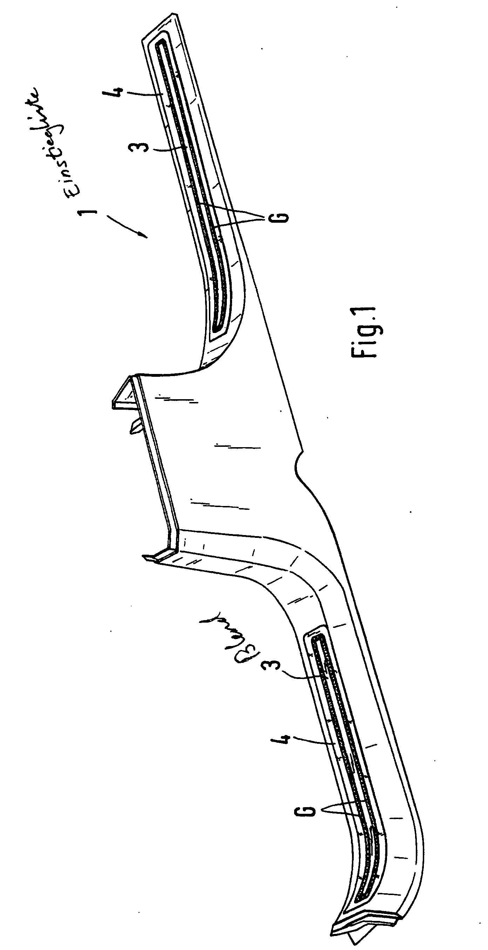

Ein Ausführungsbeispiel der Erfindung ist in den Zeichnungen dargestellt und wird im folgenden näher beschrieben.
Es zeigen
- Fig. 1: eine schaubildliche Darstellung auf eine Einstiegleiste mit eingesetztem Einsatzelement,

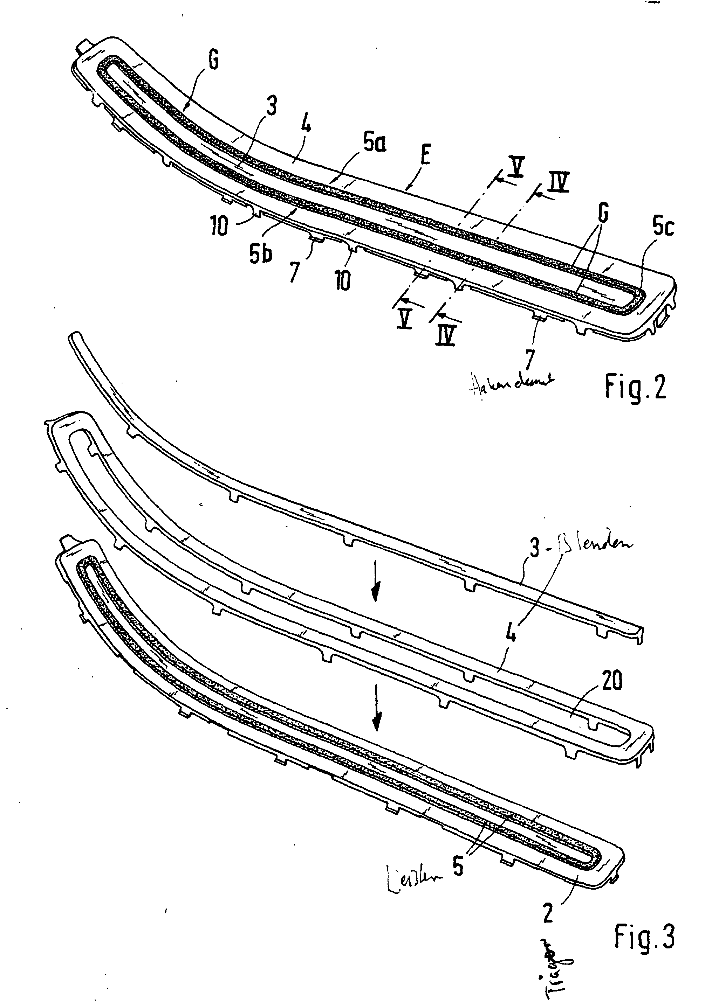

- Fig. 2: das Einsatzelement in schaubildlicher Darstellung mit Außen- und Innenblende und Gummileiste,
- Fig. 3: das Einsatzelement mit den zusammensetzbaren Blenden,
- Fig. 4: einen Schnitt nach der Linie IV-IV der Fig. 2 durch das Einssatzelement und
- Fig. 5: einen Schnitt nach der Linie V-V der Fig. 2 durch das Einsatzelement.

Eine Einstiegleiste 1 für ein Kraftfahrzeug ist auf einem Türschweller eines Fahrzeugaufbaus im Türausschnitt angeordnet. In dieser Einstiegleiste 1 wird ein als Träger 2 für Blenden 3, 4 ausgebildetes Einsatzelement E eingesetzt, wobei zwischen den beiden Blenden 3 und 4 eine Gummileiste oder auch mehrere Leisten 5 vorgesehen sind.

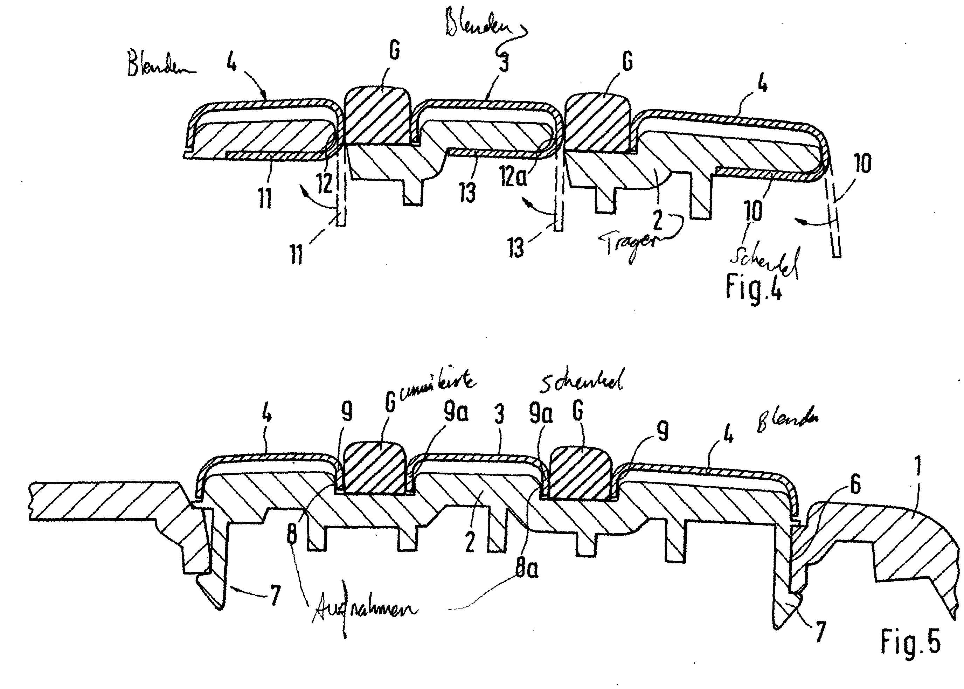

Die Einstiegleiste 1 deckt den Türschweller ab und in dieser Leiste 1 wird in einem Ausschnitt 6 der Träger 2 eingesetzt und über randseitige Hakenelemente 7 festgesetzt, wie in Fig. 5 näher gezeigt ist.

Im Träger 2, der beispielsweise aus Kunststoff besteht, sind nutförmige Aufnahmen 8, 8a eingeformt, in welchen die Gummileiste 5 formschlüssig gehalten sind. Auf den Träger 2 werden die Blenden 3, 4 gesetzt, die im Querschnitt U-profilförmig ausgebildet sind und deren Schenkel 9a, 10 in die Aufnahmen 8, 8a eingreifen. Die eine Blende 4 weist einen Ausschnitt 20 auf und umgibt die Gummileiste G von außen und die weitere Blende 3 ist zwischenliegend der Gummileiste G angeordnet.

Die Gummileiste G besteht nach dem Ausführungsbeispiel aus zwei parallel und beabstandet zueinander liegenden Strängen 5a, 5b, die zwischen sich die schmale Blende 3 aufweisen. Die Gummileiste 5 erstreckt sich vorzugsweise insgesamt in Längsrichtung des Trägers 2 fast über die gesamte Trägerlänge und ist als geschlossene umlaufende Gummileiste G ausgeführt.

Eine Verbindung der Außenblende 4 mit dem Träger 1 erfolgt beispielsweise über randseitige Laschen 10 sowie innenliegende weitere Laschen 11, welche zum Festsetzen am Träger 2 umgebogen werden, wie in Fig. 4 näher dargestellt ist. Die weiteren Laschen 11 sind durch Schlitze 12 des Trägers 2 gesteckt und werden zum Festsetzen ebenfalls umgebogen.

Die Befestigung der Innenblende 3 am Träger 2 erfolgt ebenfalls über randseitige Laschen 13, die durch Schlitze 12a des Trägers gesteckt werden und durch Umbiegen kann eine Befestigung der Innenblende 3 am Träger 2 erfolgen.

Die Blenden 3 und 4 bestehen vorzugsweise aus einem Edelstahlblech, welches den Träger 2 ganzflächig abdeckt und die Gummileiste G sind vorstehend zu den Blenden 3, 4 liegt angeordnet.

## Patentansprüche

1. Einstiegleiste für ein Kraftfahrzeug, die mit einem Schweller eines Fahrzeugaufbaus verbunden ist und ein Einsatzelement umfaßt, welches eine Trittfläche im Türausschnitt bildet, **dadurch gekennzeichnet, daß** das Einsatzelement (E) aus einer in einem Ausschnitt (6) der Einstiegleiste (1) gehaltenen Träger (2) besteht, der obenseitig mindestens eine Gummileiste (G) aufweist, die zwischen einer außenseitigen Blende (4) und einer weiteren innenseitigen Blende (3) angeordnet ist.

2. Einstiegleiste nach Anspruch 1, **dadurch gekennzeichnet, daß** der Träger (2) über Hakenelemente (7) an seiner Randseite im Ausschnitt (6) der Einstiegleiste (1) befestigbar ist und die beiden Blenden (3, 4) über Laschen (10, 11, 13) mit dem Träger (2) verbindbar sind.

3. Einstiegleiste nach den Ansprüchen 1 oder 2, **dadurch gekennzeichnet, daß** die Gummileiste (G) aus beabstandet zueinander angeordneten Längssträngen (5a, 5b) besteht, die über Querstränge (5c) eine geschlossene und rechteckförmig ausgestaltete Gummileiste (G) bilden.

4. Einstiegleiste nach den Ansprüchen 1, 2 oder 3, **dadurch gekennzeichnet, daß** die geschlossene Gummileiste (G) in einem Freiraum (20) zwischen der Außenblende (4) und der Innenblende (3) angeordnet ist.

5. Einstiegleiste nach den Ansprüchen 1, 2, 3 oder 4, **dadurch gekennzeichnet, daß** die Gummileiste (G) über die Außenfläche der Blenden (3, 4) hervorragt.

6. Einstiegleiste nach den Ansprüchen 1, 2, 3, 4 oder 5, **dadurch gekennzeichnet, daß** innenliegende Laschen (11) der Außenblende (4) und außenliegende Laschen (13) der Innenblende durch Schlitze (12, 12a) im Träger (2) gesteckt und durch Umbiegen der Laschen (11, 13) an diesem festsetzbar sind.

7. Einstiegleiste nach Anspruch 6, **dadurch gekennzeichnet, daß** die außenliegenden Laschen (13) der Außenblende (4) den Träger (2) von außen her zum Befestigen umgreifen.

8. Einstiegleiste nach einem oder mehreren der vorhergehenden Ansprüche, **dadurch gekennzeichnet, daß** der Träger (2) aus einem Kunststoffmaterial besteht und die aufgesetzten Blenden (3, 4) aus einem Edelstahlwerkstoff bestehen.

9. Einstiegleiste nach einem oder mehreren der vorhergehenden Ansprüche, **dadurch gekennzeichnet, daß** die Blenden (3, 4) im Querschnitt U-profilförmig ausgebildet sind und mit ihren Schenkeln (9, 9a) in nutförmige Aufnahmen (8, 8a) eingreifen und zwischen den Schenkeln (9, 9a) der Aufnahme (8, 8a) die Gummileiste (G) formschlüssig gehalten ist.

## Claims

1. A running board for a motor vehicle, said running board being connected to a sill of a vehicle body and comprising an insert forming a step surface in the door aperture, **characterised in that** the insert (E) comprises a support (2) which is held in an opening (6) in the running board (1) and has on its upper surface at least one rubber strip (G) arranged between an outer surround (4) and a further, inner surround (3).

2. A running board according to claim 1, **characterised in that** the support (2) is fixable, by means of hook members (7) on its side edge, in the opening (6) of the running board (1), and the two surrounds (3, 4) are connectable to the support (2) by means of tongues (10, 11, 13).

3. A running board according to claim 1 or 2, **characterised in that** the rubber strip (G) comprises longitudinal strands (5a, 5b) which are arranged spaced apart and which form a closed, rectangular rubber strip (G) by means of cross strands (5c).

4. A running board according to claim 1, 2 or 3, **characterised in that** the closed rubber strip (G) is arranged in a gap (20) between the outer surround (4) and the inner surround (3).

5. A running board according to claim 1, 2, 3 or 4, **characterised in that** the rubber strip (G) projects beyond the outer surface of the surrounds (3, 4).

6. A running board according to claim 1, 2, 3, 4 or 5, **characterised in that** inner tongues (11) of the outer surround (4) and outer tongues (13) of the inner surround are inserted through slots (12, 12a) in the support (2) and are fixable thereto by bending the tongues (11, 13) round.

7. A running board according to claim 6, **characterised in that** the outer tongues (13) [*sic* - (10)] of the outer surround (4) engage around the support (2) from outside and are thereby fastened.

8. A running board according to one or more of the preceding claims, **characterised in that** the support (2) is made of a plastics material and the mounted surrounds (3, 4) are made of a stainless steel material.

9. A running board according to one or more of the preceding claims, **characterised in that** the surrounds (3, 4) are U-shaped in cross-section and engage with their arms (9, 9a) in groove-type recesses (8, 8a), and the rubber strip (G) is held positively between the arms (9, 9a) in the recesses (8, 8a).

## Revendications

1. Profilé pour un véhicule automobile, qui est relié à un seuil de porte d'une carrosserie de véhicule et comprend un insert formant une surface de marchepied dans la découpe de porte,
**caractérisé en ce que** l'insert (E) est un support (2) maintenu dans une découpe (6) du profilé (1) et présentant dans la face supérieure au moins une bande en caoutchouc (G) disposée entre un cadre extérieur (4) et un autre cadre intérieur (3).

2. Profilé selon la revendication 1,
**caractérisé en ce que** le support (2) peut être fixé par des éléments en crochet (7) disposés à sa périphérie dans la découpe (6) du profilé (1), et les deux cadres (3, 4) peuvent être reliés au support (2) par des éclisses (10, 11, 13).

3. Profilé selon les revendications 1 ou 2, **caractérisé en ce que** la bande en caoutchouc (G) est composée de rubans longitudinaux (5a, 5b) disposés à distance les uns des autres, qui forment par l'intermédiaire de rubans transversaux (5c) une bande en caoutchouc (G) fermée et rectangulaire.

4. Profilé selon les revendications 1, 2 ou 3, **caractérisé en ce que** la bande en caoutchouc (G) fermée est disposée dans un espace libre (20) entre les cadres extérieur et intérieur (3, 4).

5. Profilé selon les revendications 1, 2, 3 ou 4, **caractérisé en ce que** la bande en caoutchouc (G) saillit de la face extérieure des cadres (3, 4).

6. Profilé selon les revendications 1, 2, 3, 4 ou 5, **caractérisé en ce que** des éclisses intérieures (11) du cadre extérieur (4) et des éclisses extérieures (13) du cadre intérieur sont engagées dans des fentes (12, 12a) du support et peuvent être fixées à celui-ci en repliant les éclisses (11, 13).

7. Profilé selon la revendication 6,
**caractérisé en ce que** pour la fixation les éclisses extérieures (13) du cadre extérieur (4) entourent le support (2) de l'extérieur.

8. Profilé selon l'une ou plusieurs des revendications précédentes,
**caractérisé en ce que** le support (2) est en matière plastique et les cadres (3, 4) rapportés en matériau d'acier inoxydable.

9. Profilé selon l'une ou plusieurs des revendications précédentes,
**caractérisé en ce que** les cadres (3, 4) présentent une section transversale en forme de U et s'engagent par leurs branches (9, 9a) dans des logements (8, 8a) en forme de rainures, et la bande en caoutchouc (G) est maintenue par complémentarité de formes entre les branches (9, 9a) du logement (8, 8a).
